# FASCICULE DE BREVET EUROPEEN

(11) **EP 0 518 732 B1**
(45) Date de publication et mention de la délivrance du brevet: **23.08.1995**
(21) Numéro de dépôt: 92401519.1
(22) Date de dépôt: 03.06.1992
(51) Int. Cl.: F16D 65/16, F16D 65/56, B61H 5/00, B60T 1/06

(54) **Dispositif de commande de frein à disque, notamment pour matériel ferroviaire**
Steuervorrichtung für Scheibenbremse, insbesondere für Eisenbahnmaterial
Disc brake control device, particularly for railway material

(30) Priorité: 14.06.1991 FR 9107344
(43) Date de publication de la demande: 16.12.1992
(73) Titulaire: FREINRAIL S.A., F-92706 Colombes Cédex (FR)
(72) Inventeur: Chappez, Robert, F-92170 Vanves (FR); Lapeyre, Patrick, F-93400 Saint-Ouen (FR)
(74) Mandataire: Phélip, Bruno

(56) Documents cités:
- DE-C- 562 119
- FR-A- 2 334 015
- US-A- 1 804 185
- US-A- 3 108 658

## Description

L'invention est relative aux dispositifs de commande de freins à disque, notamment, mais non exclusivement, pour matériel ferroviaire.

Elle concerne plus particulièrement un dispositif de commande de frein commandé par un fluide sous pression, apte à être monté sur l'axe d'un arbre moteur à freiner et comportant un frein à disque passif à ressort qui assure la fonction de frein de stationnement et un frein actif qui assure la fonction de frein "de service " pour réaliser le freinage, cette dernière fonction pouvant d'ailleurs être accomplie par la combinaison du frein à disque passif et d'une commande pneumatique agissant sur celui-ci.

Différentes structures de frein à disque, notamment pour matériel ferroviaire, sont déjà connues.On peut, par exemple, citer des dispositifs de commande de frein à disque commercialisés par la demanderesse avant 1982. Ces freins à disque sont notamment du type à pince ou à étrier.

Le dispositif de commande correspondant comporte un disque fixé sur l'arbre à freiner, au moins une paire de garnitures disposées de part et d'autre dudit disque et au moins une tige de poussée apte à déplacer par une première extrémité les garnitures contre les faces du disque.

Ce dispositif de commande et notamment la tige de poussée ne sont pas coaxiaux avec l'arbre à freiner. Ceci induit un effort radial dans l'arbre, lors du freinage.

Le but de l'invention est de réaliser un dispositif de commande de frein à disque qui :
- fournit un couple de freinage sur l'arbre moteur sans y induire d'effort radial appréciable, contrairement aux dispositifs de freinage de la technique antérieure à étrier ou timonerie et cylindre de commande ;
- présente une grande surface de garnitures de friction pour le freinage, ce qui permet de réduire la pression spécifique exercée sur ces garnitures pour un même effort de freinage engendré ;
- réduit l'encombrement global du dispositif ; et/ou
- assure un excellent équilibrage des masses mobiles du dispositif.

Ce but est atteint par un dispositif de commande de frein à disque comportant en outre au moins un piston annulaire coulissant disposé coaxialement audit arbre à freiner, ladite tige de poussée étant allongée coaxialement à l'arbre à freiner et dans le prolongement de celui-ci et ledit piston, sous l'action d'un fluide de commande, agissant sur la seconde extrémité de ladite tige de poussée pour appliquer lesdites garnitures contre les faces dudit disque, afin d'assurer le freinage dudit arbre.

Dans un mode de réalisation, le dispositif comporte un seul piston annulaire coulissant et une unité de réglage du jeu global au repos entre disque et garnitures, ledit piston, en réponse à l'application d'une pression sur une de ses faces, déplaçant, par l'intermédiaire de ladite unité de réglage, ladite tige de poussée pour provoquer l'application des garnitures contre les faces dudit disque, afin d'assurer le freinage de service dudit arbre.

Dans un autre mode de réalisation, le dispositif comporte un seul piston annulaire coulissant, un ressort maintenu normalement comprimé par ce second piston et une unité de détection d'une pression différentielle, ledit piston, sous la commande par ladite unité de détection, en réponse à une pression différentielle modifiable appliquée à celle-ci, déplaçant ladite tige de poussée pour provoquer l'application des garnitures contre les faces dudit disque, afin d'assurer le freinage de stationnement dudit arbre.

Avantageusement, le dispositif comporte à la fois un premier piston annulaire coulissant, qui coopère avec une unité de réglage, et un second piston annulaire coulissant, coopérant avec un ressort et avec une unité de détection, le premier piston assurant le freinage de service et le second piston assurant le freinage de stationnement ; de préférence ledit second piston est monté coulissant dans ledit premier piston.

En particulier, le second piston porte une première pièce dentée, libre en rotation, mais fixe en translation, par rapport à lui, qui vient engrener, sous l'effet dudit ressort lorsqu'il se détend, avec une seconde pièce dentée afin d'agir sur la tige de poussée.

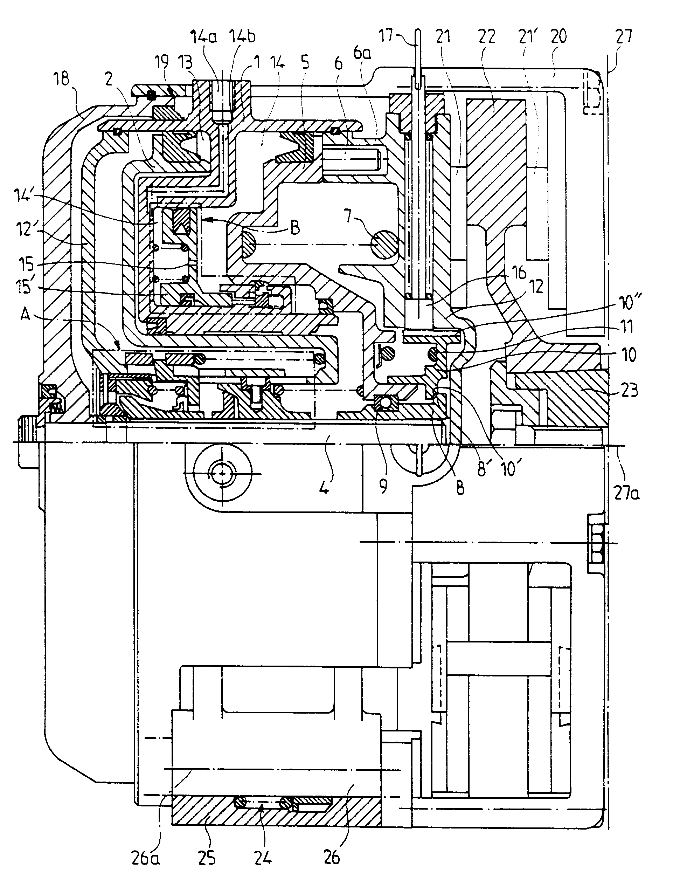

On va décrire maintenant avec référence à la figure unique , qui représente , moitié supérieure en coupe axiale et moitié inférieure en vue extérieure , un mode de réalisation préféré , mais nullement limitatif , d'un dispositif de commande de frein à disque selon l'invention.

Dans un cylindre 1 , fermé par un flasque avant 12′ et un flasque arrière 12 qui en sont solidaires, est disposé un premier piston annulaire coulissant 2 et un second piston annulaire coulissant 5 .

Une pression pneumatique de commande du déplacement vers la gauche du premier piston 2 dans le cylindre 1 est applicable dans la chambre 13 et une pression pneumatique de commande du déplacement vers la droite du second piston 5 dans le cylindre 1 est applicable dans la chambre 14′ par le raccordement 14a et le canal 14b.

Au premier piston 2 est associé une unité A de réglage du jeu global des garnitures de friction 21, 21′ par rapport aux deux faces du disque 22 . Cette unité A peut être du type décrit et illustré dans le brevet français 2.334.016 déposé le 1er Décembre 1976 .

Normalement , la même pression fluide existe dans les chambres 14 et 14′reliées par un canal 15 percé dans une pièce 15′ faisant partie d'une unité B qui détermine la pression différentielle entre les chambres 14 et 14′, cette unité étant du type décrit dans la demande de brevet européen EP-A-0 457 030 déposée le 11 Avril 1991 .

Le second piston 5 est empêché de tourner dans le cylindre 1, sous l'effet de l'effort tournant de freinage, par un doigt 6 logé dans un trou borgne 6a ménagé dans le flasque arrière 12. Un ressort hélicoïdal 7 est disposé entre le flasque 12 et le second piston 5 pour solliciter celui-ci vers la gauche en même temps que l'écrou 8 qui est solidaire en translation, mais non en rotation, avec ce piston par l'intermédiaire d'une butée à billes 9.

L'écrou 8 porte une première denture 8′ qui peut engrener avec une première denture 10′ portée par une roue doublement dentée 10 qui est plaquée par un ressort hélicoïdal 11 contre le flasque arrière 12; le ressort 11 impartit donc, en condition normale, un intervalle suffisant entre les dentures 8′ et 10′ pour qu'elles n'engrènent pas . L'écrou 8 est alors libre en rotation du fait de la butée à billes 9 et il peut se visser ou se dévisser sur la tige 4 lors des serrages et desserrages en cas de freinage de service.

Un anneau 17 permet de tirer le cliquet 16 qui coopère avec une seconde denture 10˝ de la roue doublement dentée 10.

Un flasque avant 18 porte un manchon 19 dont sont solidaires deux demi-coquilles 20.

Enfin un répartiteur de jeu à friction 24 répartit le desserrage des garnitures 21, 21′ de façon égale de part et d'autre du disque 22 en faisant reculer vers la gauche le cylindre 1 et ses deux oreilles 25 par rapport aux axes de suspension 26a de l'ensemble 26 et 27a (qui répartit le jeu ) du flasque 27 du moteur (non représenté ) qui entraîne , en l'absence de freinage, l'arbre moteur 23 sur lequel est monté le disque 22.

Le fonctionnement du dispositif est le suivant .

En ce qui concerne tout d'abord le freinage de service , celui-ci est commandé en appliquant une pression fluide dans la chambre 13 ce qui fait avancer vers la gauche le premier piston 2 dont le déplacement se transmet, à travers l'unité de réglage de jeu A à la tige de poussée 4 dont l'action sera précisée ci-après .

En ce qui concerne le frein de stationnement , on remarquera d'abord que le cylindre 1 se trouve en permanence sous pression dans les chambres 14 et 14′ et que donc la position relative entre l'écrou 8 et la roue doublement dentée 10 , plaquée par le ressort 11 contre le flasque arrière 12, conserve un jeu entre des dentures 8′ et 10′ .

Par ailleurs , le second piston 5 qui est sous pression comprime le ressort 7 et il est donc appliqué dans sa position de butée vers la gauche .

Si l'on suppose tout d'abord une chute de pression brutale de l'alimentation de l'entrée 14a et donc une différence de pression brusquement croissante entre les chambres 14 et 14′ , l'unité B détecte une différence de pression par passage de fluide à travers l'orifice 15 entre les chambres 14 et 14′ et commande le verrouillage du second piston dans la position illustrée sur la figure en interdisant l'action du ressort 7.

Au contraire , en cas de chute lente de pression dans la chambre 14′ par rapport à la chambre 14 , l'effort du ressort 7 se développe et le second piston 5 se déplace vers la gauche en entraînant en translation l'écrou 8 qui vient s'immobiliser en rotation dans la denture 10′ de la roue doublement dentée 10 . L'effort est alors transmis à la tige de poussée 4 , la roue doublement dentée 10 étant devenue solidaire du piston 5 et étant toujours immobilisée en rotation par le cliquet 16 dans la seconde denture 10˝ de la roue doublement dentée 10 .

Une traction sur l'anneau 17 permet de libérer , si cela est nécessaire , la roue dentée 10 en rotation ainsi que l'écrou 8 qui tourne avec elle par coopération des dentures 10′ et 8′ . L'écrou 8 se visse alors sur la tige 4 , l'action du ressort 7 n'agissant plus sur la tige 4 ; le piston 5 vient alors en butée dans le cylindre 1 .

Après un déverrouillage , lors de remise en pression des chambres 14 et 14′, le ressort 7 est recomprimé et l'ensemble de l'écrou 8 et de la roue dentée 10 recule simultanément , la roue dentée 10 venant buter sur le flasque arrière 12 ; les dentures 8′ et 10′ de l'écrou 8 et de la roue dentée 10 respectivement se libèrent . L'ensemble est par conséquent à nouveau armé . Par contre , si aucune action n'est exercée sur l'anneau 17 , la remise en pression des gaz des chambres 14 et 14′ recomprime le ressort 7 et l'unité B revient à sa position initiale .

D'après la description qui précède du fonctionnement, on a constaté que , tant pour le freinage de service que pour le freinage de stationnement , on agit sur la tige de poussée 4 . On va examiner maintenant comment le déplacement de cette tige de poussée 4 réalise respectivement le freinage .

Les actions engendrées par le premier 2 et le second piston 5 sur la tige de poussée 4 sont transmises , par l'intermédiaire du flasque avant 18 , au manchon 19 qui tire les deux demi-coquilles 20 . Le recul vers la droite du cylindre 1 et de son flasque arrière 12 qui porte les garnitures de friction 21 ainsi que l'avance vers la gauche des demi-coquilles 20 qui portent les garnitures 21′ viennent pincer le disque et donc freiner l'arbre moteur 23 par l'intermédiaire d'un accouplement par exemple conique .

Le désserrage rend le jeu entre le disque 22 et les garnitures 21, 21′ tel que réglé par l'unité de réglage A , tandis que le répartiteur à friction 24 répartit le jeu de façon égale de part et d'autre du disque 22 en faisant reculer le cylindre 1 et ses oreilles 25 par rapport aux axes de suspension de l'ensemble 26 et au flasque 27 du moteur ( non représenté ) .

On voit qu'avec la structure qui vient décrite en détail avec référence à la figure unique , on réalise le but de l'invention précisé dans le préambule de la présente demande .

Comme il va de soi on peut apporter de nombreuses variantes au mode de réalisation décrit et illustré en y remplaçant certains éléments par des éléments équivalents sans s'écarter pour cela de la portée de l'invention telle que définie dans les revendications ci-annexés dans lesquelles les nombres de référence ont été donnés uniquement pour faciliter la compréhension desdites revendications.

## Revendications

1. Dispositif de commande de frein à disque comportant un disque (22) fixé sur l'arbre à freiner (23) , au moins une paire de garnitures (21, 21′) disposées de part et d'autre dudit disque (22) et au moins une tige de poussée (4) apte à déplacer par une première extrémité lesdites garnitures contre les faces dudit disque (22), caractérisé en ce qu'il comporte en outre au moins un piston annulaire coulissant (2 ; 5) disposé coaxialement audit arbre à freiner (23), en ce que ladite tige de poussée (4) est allongée coaxialement à l'arbre à freiner (23) et dans le prolongement de celui-ci et en ce que ledit piston (2 ; 5), sous l'action d'un fluide de commande , agit sur une seconde extrémité de ladite tige de poussée (4) pour appliquer lesdites garnitures (21, 21') contre les faces dudit disque (22), afin d'assurer le freinage dudit arbre (23).

2. Dispositif selon la revendication 1, caractérisé en ce qu'il comporte un seul piston annulaire coulissant (2) et une unité (A) de réglage du jeu global au repos entre disque et garnitures , ledit piston, en réponse à l'application d'une pression sur une de ses faces, déplaçant , par l'intermédiaire de ladite unité de réglage, ladite tige de poussée pour provoquer l'application des garnitures contre les faces dudit disque , afin d'assurer le freinage de service dudit arbre .

3. Dispositif selon la revendication 1 , caractérisé en ce qu'il comporte un seul piston annulaire coulissant (5) , un ressort (7) maintenu normalement comprimé par ce second piston et une unité de détection (B) d'une pression différentielle , ledit piston, sous la commande par ladite unité de détection , en réponse à une pression différentielle modifiable appliquée à celle-ci , déplaçant ladite tige de poussée pour provoquer l'application des garnitures contre les faces dudit disque , afin d'assurer le freinage de stationnement dudit arbre .

4. Dispositif selon la revendication 1 , caractérisé en ce qu'il comporte à la fois un premier piston annulaire coulissant (2) selon la revendication 2 , qui coopère avec l'unité de réglage (A) , et un second piston annulaire coulissant (5) selon la revendication 3 , coopérant avec ledit ressort (7) et avec l'unité de détection (B) , le premier piston (2) assurant le freinage de service .

5. Dispositif selon la revendication 4 , caractérisé en ce que ledit second piston (5) est monté coulissant dans ledit premier piston (2).

6. Dispositif selon l'une quelconque des revendications 1, 3, 4, 5 caractérisé en ce que le seul piston (5) ou le second piston (5) porte une première pièce dentée (8) , libre en rotation, mais fixe en translation, par rapport à lui , qui vient engrener, sous l'effet du ressort (7) lorsqu'il se détend , avec une seconde pièce dentée (10) afin d'agir sur la tige de poussée (4).

## Claims

1. A disc brake control device, comprising a disc (22) fixed to the shaft to be braked (23) at least one pair of gaskets (21, 21') arranged on either side of the said disc (22) and at least a pushing rod (4) able to move by a first end the said gaskets against the surfaces of the said disc (22), characterised in that it contains, moreover, at least one annular sliding piston (2; 5) arranged coaxially with respect to the shaft to be braked (23), in that the said pushing rod (4) lies coaxially with respect to the shaft to be braked (23) and in the extension of the said, and in that the said piston (2 ; 5) under the effect of a control fluid, acts on a second end of the said pushing rod (4) in order to apply the said gaskets (21, 21') against the surfaces of the said disc (22) in order to ensure braking of the said shaft (23).

2. A device according to claim 1, characterised in that it contains a single annular sliding piston (2) and a unit (A) for the adjustment of the global clearance between discs and gaskets when not operated, whereas the said piston, in reaction to the application of a pressure against one of its surfaces, moves the said pushing rod through the said adjustment unit, to cause the application of the gaskets against the surfaces of the said disc, in order to ensure the service braking of the said shaft.

3. A device according to claim 1, characterised in that it contains a single annular sliding piston (5), a spring (7) maintained normally compressed by this second piston and a differential pressure detection unit (B), whereas the said piston, under the control of the said detection unit, in reaction to a modifiable differential pressure applied to the said unit, moves the said pushing rod in order to cause the application of the gaskets against the surfaces of the said disc, in order to ensure the parking braking of the said shaft.

4. A device according to claim 1, characterised in that it contains at the same time a first annular sliding piston (2) according to claim 2, which works together with the adjustment unit (A) and a second annular sliding piston (5) according to claim 3, working together with the said spring (7) and with the detection unit (B), whereby the first piston (2) ensures the service braking.

5. A device according to claim 4, characterised in that the second piston (5) is mounted in a sliding way inside the said first piston (2).

6. A device according to any one of the claims 1, 3, 4, 5 characterised in that the single piston (5) or the second piston (5) carries a first toothed part (8), free in rotation, but fixed in translation, with respect to the said piston, which engages, under the effect of the spring (7) when unfolding, a second toothed part (10) in order to act on the pushing rod (4).

## Patentansprüche

1. Steuerungsvorrichtung für eine Scheibenbremse mit einer Scheibe (22), die auf einer zu bremsenden Welle (23) befestigt ist, ferner mit wenigstens einem Reibgarniturpaar (21,21'), deren Reibgarnituren beidseits der Scheibe (22) angeordnet sind, und mit wenigstens einer Schiebestange (4), die mit einem ersten Ende die Garnituren gegen die Flächen der Scheibe (22) verschieben kann,
**dadurch gekennzeichnet,**
daß wenigstens ein gleitender Ringkolben (2;5) vorgesehen ist, der koaxial zu der zu bremsenden Welle (23) angeordnet ist, daß die Schiebestange (4) koaxial zu der zu bremsenden Welle (23) verlängert ist und sich in deren Verlängerung befindet, und daß der Kolben (2;5) unter der Einwirkung eines Steuerungsmediums auf ein zweites Ende der Schiebestange (4) einwirkt, um die Garnituren (21,21') an die Flächen der Scheibe (22) anzupressen, so daß die Welle (23) gebremst wird.

2. Steuerungsvorrichtung nach Anspruch 1,
**dadurch gekennzeichnet,**
daß ein einziger gleitender Ringkolben (2) vorgesehen ist sowie eine Baueinheit (A) zum Einstellen des Gesamtspiels zwischen der Scheibe und den Garnituren im Ruhezustand, wobei der Kolben, abhängig von der Anlage eines Drucks an einer seiner Flächen, über die Stelleinheit die Schiebestange verschiebt, um die Garnituren an die Flächen der Scheibe anzulegen, um im Betrieb die Welle abzubremsen.

3. Steuerungsvorrichtung nach Anspruch 1,
**dadurch gekennzeichnet,**
daß ein einziger gleitender Ringkolben (5) vorgesehen ist, ferner eine Feder (7), die normalerweise von diesem zweiten Kolben komprimiert gehalten wird, und eine Nachweiseinheint (B) für einen Differenzdruck, und daß der Kolben unter der Steuerung der Nachweiseinheit und abhängig von einem an ihm anliegenden, änderbaren Differenzdruck die Schiebestange verschiebt, um die Garnituren an die Flächen der Scheibe anzupressen, so daß die Welle im Stillstand abgebremst wird.

4. Steuerungsvorrichtung nach Anspruch 1,
**dadurch gekennzeichnet,**
daß ein erster gleitender Ringkolben (2) nach Patentanspruch 2 vorgesehen ist, der mit der Steuerungseinheit (A) zusammenarbeitet, sowie ein zweiter, gleitender Ringkolben (5) nach Patentanspruch 3, der mit der Feder (7) und mit der Nachweiseinheit (B) zusammenarbeitet, wobei der erste Kolben (2) im Betrieb das Abbremsen bewirkt.

5. Steuerungsvorrichtung nach Anspruch 4,
**dadurch gekennzeichnet,**
daß der zweite Kolben (5) gleitend im ersten Kolben (2) angeordnet ist.

6. Steuerungsvorrichtung nach einem der Patentansprüche 1, 3, 4 oder 5,
**dadurch gekennzeichnet,**
daß der einzige Kolben (5) oder der zweite Kolben (5) ein erstes, gezahntes Teil (8) trägt, das sich in Bezug auf den Kolben frei drehen kann, das aber in Bezug auf ihn translationsfest angeordnet ist, und das unter der Einwirkung der Feder (7), wenn diese sich ausdehnt, mit einem zweiten gezahnten Teil (10) kämmt, um auf die Schiebestange (4) einzuwirken.
